# FASCICULE DE BREVET EUROPEEN

(11) **EP 0 365 625 B1**
(45) Date de publication et mention de la délivrance du brevet: **10.02.1993**
(21) Numéro de dépôt: 89903753.5
(22) Date de dépôt: 17.03.1989
(51) Int. Cl.: C02F 1/78

(54) **DISPOSITIF D'EMETTEUR D'OZONE POUR INSTALLATIONS EXISTANTES DE FILTRATION D'EAU POUR PISCINES**
OZONABGABEVORRICHTUNG FÜR EINE BESTEHENDE EINRICHTUNG FÜR WASSERFILTRATION FÜR SCHWIMMBÄDER
OZONE EMITTER DEVICE FOR EXISTING WATER FILTERING INSTALLATIONS OF SWIMMING POOLS

(30) Priorité: 18.03.1988 FR 8803765
(43) Date de publication de la demande: 02.05.1990
(73) Titulaire: RIEFFEL, Serge, F-83000 Toulon (FR)
(72) Inventeur: RIEFFEL, Serge, F-83000 Toulon (FR)
(74) Mandataire: Roman, Michel
(86) Numéro de dépôt international: FR8900117
(87) Numéro de publication internationale: WO8908615

(56) Documents cités:
- BE-A- 826 801
- FR-A- 2 149 402
- Journal WPCF, vol. 50, no. 7, juillet 1978, K.S. Ng et al.: "Ozone treatment of kraft mill wastes", pages 1742-1749, see page 1743, figure 1

## Description

La présente invention a pour objet un dispositif d'émetteur d'ozone pour installations existantes de filtration d'eau pour piscines.

Il est destiné à permettre l'installation d'un émetteur d'ozone pour la stérilisation de l'eau des piscines, en particulier les piscines à capacité d'eau réduite, permettant de conserver les éléments de filtration existants.

Plusieurs dispositifs de stérilisation de l'eau des piscines à l'aide d'ozoneurs sont déjà connus, les plus courants sont:
- Les installations à grande capacité d'eau qui présentent l'inconvénient d'être trop complexes, trop onéreuses et encombrantes pour des piscines de petite capacité. Ces dispositifs comprennent un dissécateur de l'air, un ou plusieurs refroidisseurs d'eau, un ozoneur très puissant, un mélangeur, une pompe d'injection, un bac à eau, une colonne de contact, un débimètre, un régulateur de pression, un dispositif de sécurité dû au stockage d'ozone à l'état pur.
- Les installations pour petites piscines qui débitent directement l'ozone dans l'eau, sans phase intermédiaire de stockage d'ozone; plusieurs techniques sont déjà utilisées.

C'est ainsi que l'emploi d'une chambre de contact eau-ozone avec injection de l'ozone à l'aide d'un compresseur ou d'un venturi installé à l'intérieur de la chambre de contact est connu; l'inconvénient provient de l'obligation d'installer une chambre de contact sur la tuyauterie de retour; il s'ensuit que le mélange eau-ozone est convenable, mais pas total.

On rencontre également, sur des installations neuves, l'emploi d'un filtre de fabrication spéciale, ou l'ozone aspirée par la pompe de filtration est refoulé par un conduit séparé de celui de l'eau, vers le filtre, à l'intérieur du filtre; l'inconvénient provient de l'emploi d'un filtre spécial ce qui rend cette technique peu interéssante pour les installations existantes.

Enfin lorsque l'ozone est injecté directement sur la tuyauterie de retour, sans passer dans la filtration, par l'intermédiaire d'un compresseur ou d'un venturi, on rencontre l'inconvénient d'un mélange eau-ozone très faible, alors que la production d'ozone et la quantité d'ozone dans le bassin sont très importantes.

Le brevet N° BE-A-826 801 décrit un générateur d'ozone «refoulant par un conduit séparé de celui de l'eau vers le filtre», et débitant directement dans la conduite de retour d'eau de la piscine, ce qui exige un compresseur ou une source d'air comprimé. D'autre part, les différentes versions de l'appareil nécessitent l'emploi, soit d'une chambre de contact, soit d'une pompe spéciale "à canal latéral" complétée par un diffuseur de gaz devant être incorporé au filtre principal, ce qui interdit l'utilisation de matériel standard. Enfin l'excès d'ozone présent dans la chambre à niveau constant en partie haute du filtre est envoyé directement dans la canalisation alimentant la piscine, ce qui ne garanti pas une diffusion totale, même en ayant recours à un diffuseur de gaz.

Le dispositif suivant la présente invention supprime tous ces inconvenients. En effet, il permet de réaliser une stérilisation optimum et de pouvoir s'adapter sur toutes les filtrations existantes ou futures. Grâce au passage par des stades différents tels que dépression, émulsion et pression, le mélange eau-ozone est maximum. Il est possible de règler un débit constant par rapport au débit de la filtration, afin de n'injecter que la quantité d'ozone nécessaire à la stérilisation et ainsi, de ne pas retrouver d'ozone en quantité important dans les bassins de piscine.

Il est constitué par la combinaison d'abord, d'un émetteur d'ozone équipé en amont, d'un filtre à air indépendant et d'un débimètre et en aval d'un clapet anti-retour avec filtre, ensuite, d'un venturi équipé d'une vanne de règlage de la dépression, situé sur la canalisation de retour, en amont de la pompe, enfin, d'une tuyauterie avec filtre installée entre la partie supérieure et la base du filtre principal, avec dérivation éventuelle pour le refroidissement de l'emetteur d'ozone. Dans le cas d'une filtration située sensiblement au-dessus du niveau de l'eau de la piscine, le clapet anti-retour et le venturi peuvent être supprimés, le branchement de l'ozone étant effectué sur le bouchon du pré-filtre, ou directement sur la tuyauterie en amont de la pompe.

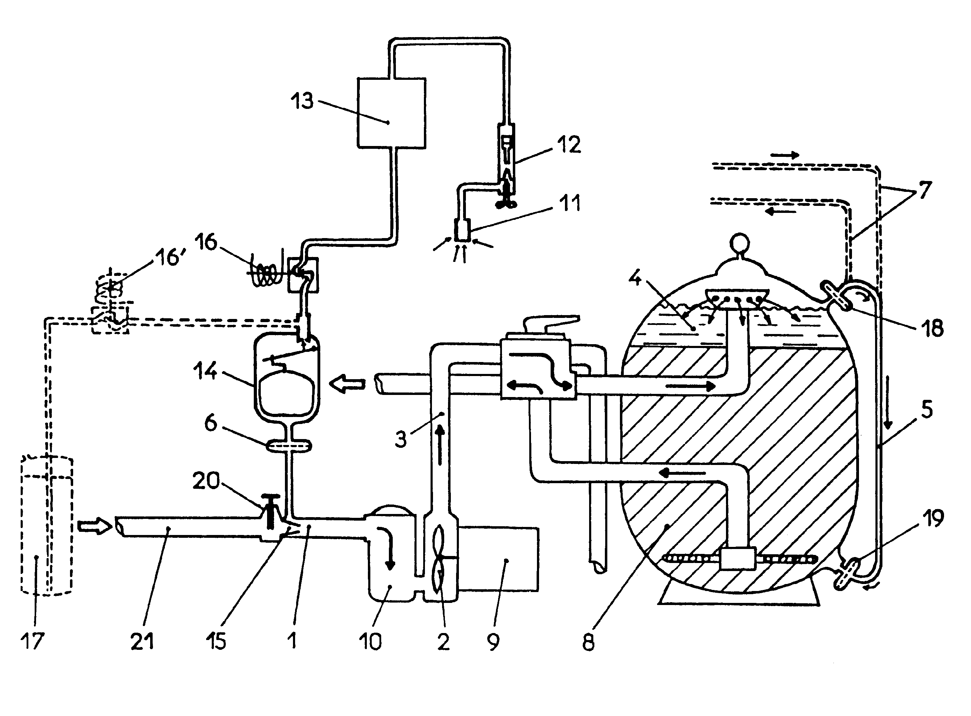

Le dessin annexé, donné à titre d'exemple non limitatif, montre une vue schématique en coupe d'une des formes de l'invention.

Le dispositif, objet de l'invention, est constitué d'un filtre à air 11 situé dans un local sain, éventuellement distinct du local abritant l'émetteur d'ozone 13, d'un débimètre 12 permettant de règler le débit d'ozone, de l'émetteur d'ozone proprement dit 13, d'un clapet anti-retour 14, assurant une fermeture efficace à l'arrêt et un passage de l'ozone sans pertes de charge, d'un filtre 6 destiné à éviter que des impuretés remontent dans le clapet 14 à l'arrêt et enfin, d'un venturi 15 par l'intermédiaire duquel l'ozone est insufflé dans la conduite de retour 21, et équipé d'une vanne 20 destinée à ajuster la dépression nécessaire. Une tuyauterie 5, entre la partie haute et la base du filtre 8, munie des filtres 18 et 19, est destinée au recyclage de l'ozone pouvant rester dans la partie supérieure 4 du filtre 8. Une dérivation éventuelle 7, piquée sur la tuyauterie 5 peut, le cas échéant assurer le refroidissement du générateur d'ozone 13.

Le cycle du mélange ozone-eau se déroule de la manière suivante:
Par l'intermédiaire du venturi 15, l'ozone est mélangé par dépression à l'eau de retour en 1, au niveau du préfiltre 10, et en amont de la pompe 9.

Le mélange est alors mis en émulsion très fine par la turbine 2 de la pompe 9. L'émulsion créée est mise sous pression en 3, pendant le cheminement vers le filtre 8. La pression se situe entre 0,8 et 1,5 bar.

Une fois dans le filtre 8, le mélange eau-ozone , toujours sous pression, barbotte une dernière fois en 4 avant de traverser le filtre 8. A ce stade, l'absorption de l'ozone est presque totale.

La quantité d'ozone résiduelle se situant dans la partie supérieure 4 du filtre 8 est recyclée par l'intermédiaire de la tuyauterie 5 pour être réinjectée une dernière fois à la base du filtre 8.

La tuyauterie 5 est protégée par des filtres 18 et 19 afin d'éviter son obstruction. Lors d'un contre-lavage, le sens de circulation à l'intérieur de 5 étant inversé, les filtres 18 et 19 se nettoient automatiquement.

L'installation peut être complétée par un dosage automatique de produit rémanent 17, branché en amont du clappet anti-retour 14.

Une prise d'aspiratiopn de produit peut être installée, fonctionnant sur le même principe de dépression, complété par les deux électro-vannes 16, 16′, alimentées par une temporisation à relais inverseur.

A l'enclenchement de la filtration, l'électro-vanne sur la tuyauterie de produit rémanent 16′ est alimentée et le venturi 15 aspire le produit rémanent stocké en 17. Après un temps donné, le relais inverseur alimente l'électro-vanne 16 branchée sur la tuyauterie d'ozone, et coupe l'éléctro-vanne 16′.

Grâce à sa simplicité, son volume réduit, son faible coût de revient, et d'exploitation grâce à la faible consommation d'ozone dû au mélange eau-ozone total, l'invention qui vient d'être décrite se prête particulièrement bien à l'installation de stérilisation par ozone sur des filtrations de piscines existantes, particulièrement pour des bassins de faible capacité.

Cependant, l'invention peut parfaitement s'adapter sur toutes les filtrations existantes ou futures.

Le positionnement des divers éléments constitutifs donnent à ce dispositif un maximum d'effets utiles qui n'avaient pas été obtenus à ce jour par des dispositifs similaires.

Cependant, les formes, dimensions et dispositions des différents éléments pourront varier dans la limite des équivalents, sans changer pour cela, la conception générale de l'invention qui vient d'être décrite.

## Revendications

1. Dispositif de stérilisation des eaux de piscines par incorporation d'un émetteur d'ozone, carartérisé par la combinaison d'abord, d'un générateur d'ozone (13) équipé en amont d'un débimètre (12) permettant le règlage du débit d'ozone et d'un filtre à air (11) incorporé ou séparé, et en aval, d'un clapet anti-retour (14) basé sur le principe du bras de levier permettant, du fait de l'amplification due au bras de levier une injection d'ozone sans pertes de charge, ainsi qu'une fermeture parfaitement étanche à l'arrêt, le clapet (14) étant suivi d'un filtre (6), ensuite, d'un venturi (15) par l'intermédiaire duquel l'ozone est insufflé dans la conduite de retour (21), où il est mélangé à l'eau par dépression, en amont de la pompe (9), au niveau du préfiltre (10), ledit venturi étant pourvu d'une vanne (20) destinée au règlage de la dépression d'aspiration, et enfin d'une tuyauterie (5) protégée par des filtres (18, 19), reliant la partie haute (4) à la base du filtre principal (8) et apte à recycler l'ozone pouvant rester dans la partie supérieure du filtre.

2. Dispositif suivant la revendication 1, se caractérisant par un système de dosage automatique de produit rémanent (17), branché en amont du clapet anti-retour (14), par l'intermédiaire d' une électro-vanne (16′), le circuit d'ozone étant contrôlé par une autre électro-vanne (16), les bobines des deux électro-vannes (16, 16′) étant alimentées par minuterie et relais inverseur.

3. Dispositif suivant la revendication 1, se caractérisant par le fait qu'un piquage (7) est dérivé de la tuyauterie (5) reliant les parties hautes et basses du filtre principal (8), et utilisé pour le refroidissement du générateur d'ozone (13).

## Patentansprüche

1. Vorrichtung zur Sterilisierung von Wasser in Schwimmbecken durch den Einsatz eines Ozonverteilers, gekennzeichnet zuerst durch die Kombination eines Ozongenerators (13), dem ein Durchsatzmesser (12) zur Regulierung des Ozondurchsatzes und ein integrierter oder separater Luftfilter (11) vorgeschaltet ist, und dahinter mit einem auf dem Prinzip des Hebelarms beruhenden Rückschlagventil (14), das aufgrund der Verstärkung infolge des Hebelarms eine Ozoninjektion ohne Lastverlust sowie bei Stillstand einen einwandfrei dichten Verschluß ermöglicht, und nach den Ventil (14) mit einem Filter (6), gefolgt von einem Venutri (15) ausgerüstet ist, über den das Ozon in die Rücklaufleitung (21) eingeblasen wird, wo es durch Unterdruck mit dem Wasser vermischt wird, vor der Pumpe (9), auf der Ebene des Vorfilters (10), ist der besagte Venturi mit einem Schieber (20) versehen, bestimmt zur Regulierung des Ansaug-Unterdrucks, und schließlich einer durch die Filter (18, 19) geschützte Rohrleitung (5), die das obere Teil (4) mit der Basis des Hauptfilters (8) verbindet und die geeignet ist, das eventuell im oberen Teil des Filters verbleibende Ozon zurückzuführen.

2. Vorrichtung nach dem Anspruch 1, gekennzeichnet durch ein automatisches Dosiersystem für remanentes Produkt (17), mit Anschluß vor dem Rückschlagventil (14), über ein Elektroventil (16′), wobei der Ozonkreis durch ein anderes Elektroventil (16) gesteuert wird, und die Spulen der beiden Elektroventile (16, 16′) über Zeitgeber und Umschaltrelais angesteuert werden.

3. Vorrichtung nach dem Anspruch 1, dadurch gekennzeichnet, daß auf der Rohrleitung (5) eine Abzweigung (7) angeordnet ist, die den oberen Teil und den unteren Teil des Hauptfilters (8) verbindet und zur Kühlung des Ozongenerators (13) benutzt wird.

## Claims

1. System for sterilizing swimming pool water by incorporating an ozone emitter, characterized by the combination firstly of an ozone generator (13) fitted upstream with a flowmeter (12) to control ozone flow and an air filter (11), incorporated or separated, and a downstream check valve (14) using the principle of a lever arm to allow, under the effect of amplification caused by the lever arm, injection of ozone without losses of head, together with a perfectly leaktight closure system on shutdown, the valve (14) being followed by a filter (6), thereafter by a Venturi tube (15) through which the ozone is injected into the return pipe (21), where it is mixed with the water by depression, upstream of the pump (9), at the level of the prefilter (10), the said Venturi tube being provided with a valve (20) for controlling the suction depression, and finally, with a pipe (5) protected by filters (18, 19) linking the upper part (4) to the base of the main filter (8) and able to recycle any ozone which may stay in the upper part of the filter.

2. Device as per claim 1, being characterized by an automatic dosing system for the residual product (17), connected upstream of check valve (14), by solenoid valve (16′), the ozone circuit being controlled by another solenoid valve (16), the coils of the two solenoid valves (16, 16′) being supplied by a timing device and changeover relay.

3. Device as per claim 1, being characterized by the fact that a pick-off (7) is connected on line (5) connecting the upper and lower parts of the main filter (8) and used to cool the ozone generator (13).
